# EUROPEAN PATENT APPLICATION

(11) **EP 4 804 017 A1**
(43) Date of publication of application: **09.09.2026**
(21) Application number: 26162380.5
(22) Date of filing: 04.03.2026
(51) Int. Cl.: G06F 8/61, G06F 21/57, G06F 8/71

(54) **SYSTEM AND METHOD FOR IDENTIFYING RISK INTRODUCERS IN SOFTWARE PACKAGES**

(30) Priority: 05.03.2025 US 202563767048 P
(71) Applicant: Jfrog Ltd., 4250465 Netanya (IL)
(72) Inventor: BARKAN, Asaf, Netanya (IL); ZARFATI, Tal, Netanya (IL); AVRAHAM, Yinon, Netanya (IL)
(74) Representative: Pearl Cohen UK

(57) **Abstract**

Systems and methods of identifying an owner of a software component that contains a risk in a software package, include: generating a list of software components included in the software package; adding metadata to the software package with enrichment information identifying entities participating in development of the software components from resources external to the software package; identifying dependencies between one or more software components of the software package; and upon determining a risk in one or more of the software components, identifying a risk introducer entity from amongst the entities.

## Description

### FIELD

Embodiments of the disclosed technology relate to identifying risk introducers in software packages.

### BACKGROUND

Software components are the building blocks of software package releases. They are independent, reusable pieces of code that generally encapsulate a specific set of functionalities. Some of the software components were provided by entities developing or using the software package, while other software components originate from and are maintained by entities other than the organizational entity which is the package developer. Some software components of the package may carry issues (technical, legal, security, etc.) that introduce risks into the software. There is a need to identify the persona/entity who introduced a risk into a software package. An entity responsible for introducing the risk may receive a request to correct the risk.

### SUMMARY

Embodiments may include a method of identifying an owner of a software component that contains a risk in a software package, the method comprising:
generating a list of software components included in the software package; adding metadata to the software package with enrichment information identifying entities participating in development of the software components from resources external to the software package; identifying dependencies between one or more software components of the software package; and upon determining a risk in one or more of the software components, identifying a risk introducer entity from amongst the entities. The processes disclosed herein may be performed and/or executed in a plurality of optional orders, for example the enrichment process may be performed in parallel/in no specific order to identify dependencies. At least some of the processes may be described by way of example and can include other optional implementations.

In some cases, the method further comprises generating a graph of the dependencies among the software components included in the software package, and wherein identifying the risk introducer entity comprises traversing the graph to identify the risk introducer entity.

In some cases, adding metadata to the software package comprises issuing requests to one or more organizational platforms services to obtain additional metadata for the software components included in the software package.

In some cases, the additional metadata comprises information regarding declared dependencies, package ownership, license, operational information and vulnerability data.

In some cases, adding metadata to the software package utilizes previously analyzed metadata from resources stored in an artifact management system to supplement the software package.

In some cases, adding metadata to the software package includes associating software components in the software package with an organizational owner based on information retrieved from the one or more organizational platforms.

In some cases, adding metadata to the software package comprises querying the organizational platform to recover missing metadata for packages installed in at least one of the following: a release bundle, docker image, or other final form factor of a software product release.

In some cases, adding metadata to the software package comprises querying the organizational platform specifically to obtain dependency declarations and software component owner associations when metadata is absent from the package itself.

In some cases, generating the graph comprises integrating the software package with a software component dependencies.

In some cases, the graph comprises software components in the software package represented as nodes and dependency relationships represented as edges connecting the nodes.

In some cases, generating the graph comprises analyzing the dependencies of software components in the software package and establishing connections between dependent and required software components. In some cases, the graph is created by matching each dependency declaration in the software package with a corresponding package, thereby modeling relationships between software components in the software package. In some cases, the graph includes direct and transitive dependencies, such that the graph reveals all paths from a root software component to its nested dependencies. In some cases, the graph is utilized to identify a shortest effective dependency path between the root software component and the software component containing the risk.

In some cases, traversing the graph to identify all paths from the root software component to each dependent software component included in the software package. In some cases, traversing the graph comprises determining, for each software component, whether its dependency relationship to the root software component is direct or transitive. In some cases, traversing the graph comprises, for each software component containing a risk, identifying a sequence of dependencies and corresponding owners leading from the root software component to the software component containing the risk. In some cases, traversing the graph is performed automatically by a graph generator configured to analyze dependency relationships and generate path information for risk assessment or reporting.

Embodiments may include a system for identifying an owner of a software component that contains a risk in a software package, the system comprising a processor configured to execute a set of instructions, the instructions comprising: generating a list of software components included in the software package; adding metadata to the software package with enrichment information identifying entities participating in development of the software components from resources external to the software package; identifying dependencies between one or more software components of the software package; and upon determining a risk in one or more of the software components, identifying a risk introducer entity from amongst the entities.

In some cases, the instructions comprise generating a graph of the dependencies among the software components included in the software package, and wherein identifying the risk introducer entity comprises traversing the graph to identify the risk introducer entity.

### BRIEF DESCRIPTION OF THE DRAWINGS

Some embodiments of the disclosed technology are described, by way of example only, with reference to the accompanying drawings. With specific reference now to the drawings in detail, it is stressed that the particulars shown are by way of example and for purposes of illustrative discussion of embodiments of the disclosed technology disclosed technology. In this regard, the description taken with the drawings makes apparent to those skilled in the art how embodiments of the disclosed technology may be practiced.

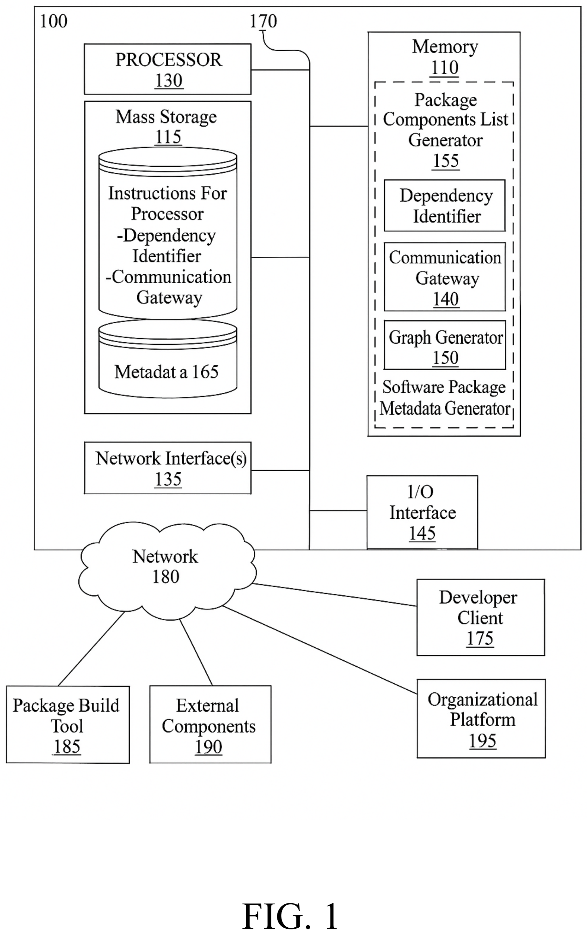

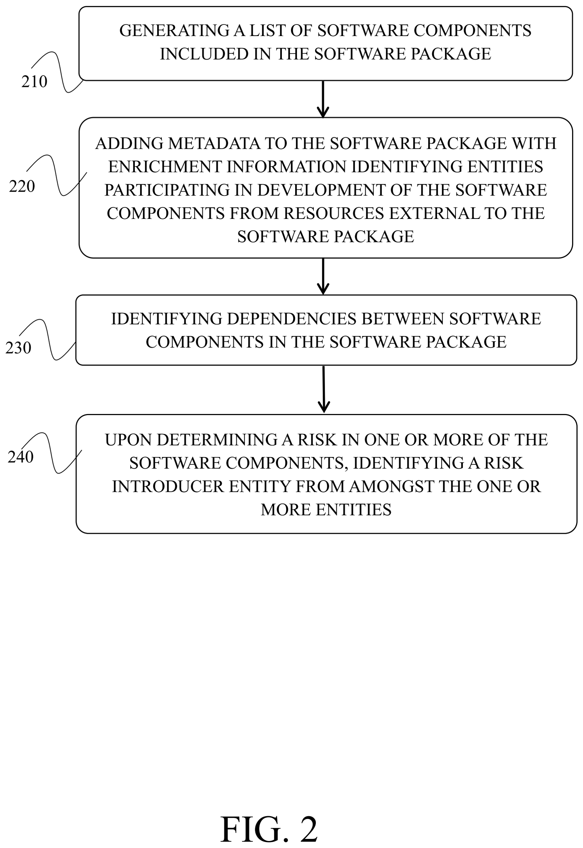

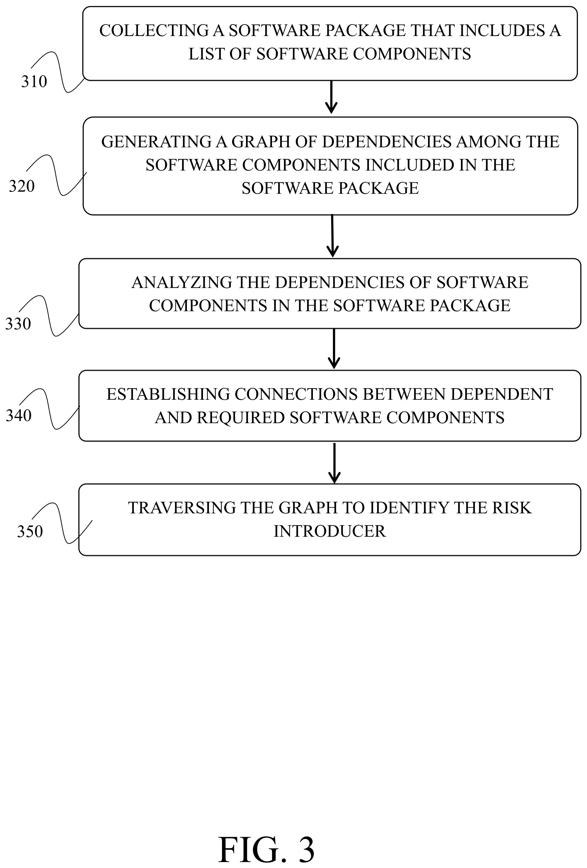

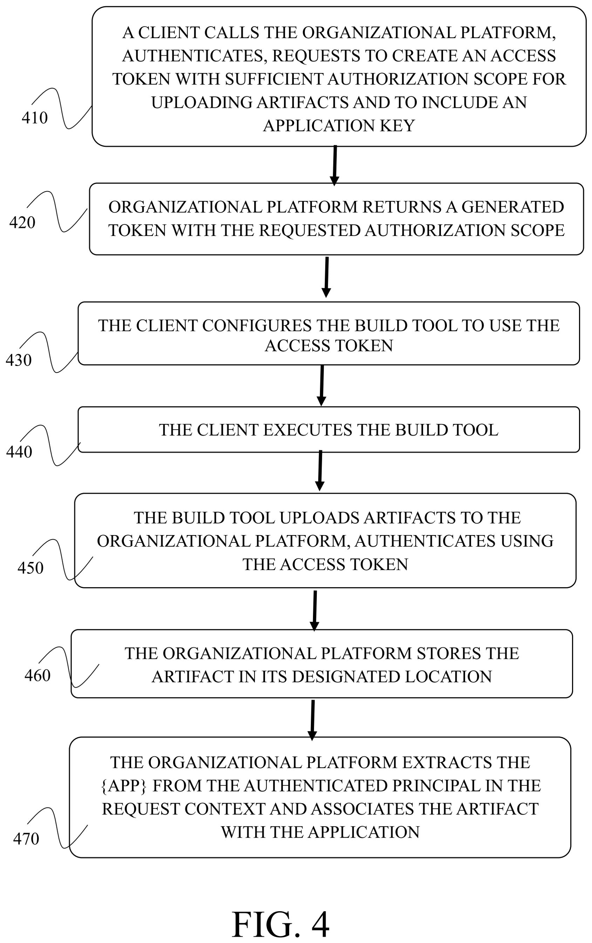

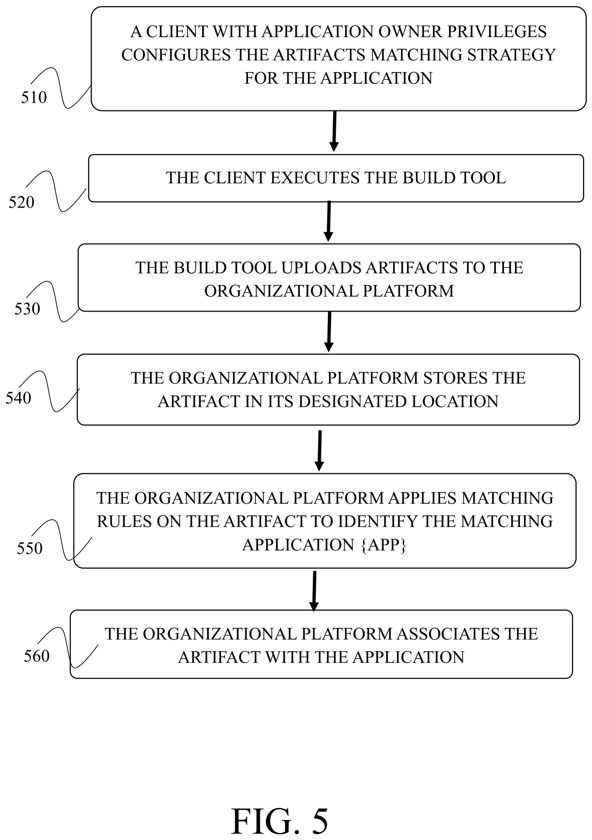

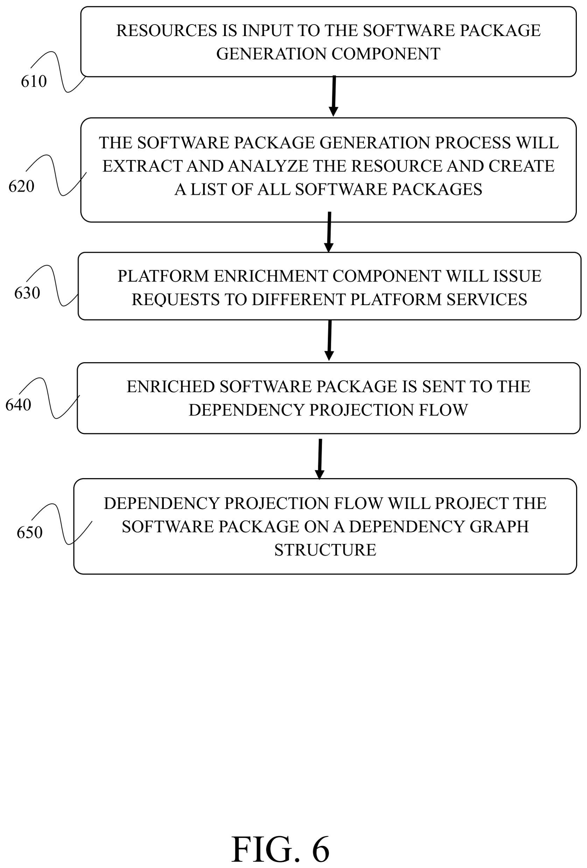

In the drawings:
Reference is made to Fig. 1, which schematically illustrates a system for identifying a software component in a software package that contains a risk, in accordance with some embodiments of the disclosed technology;
Reference is made to Fig. 2, which is a flowchart of a method of identifying a software component in a software package that contains a risk, in accordance with some embodiments of the disclosed technology;
Reference is made to Fig. 3, which is a flowchart of a method of identifying a software component in a software package that contains a risk using a dependency graph, and identifying a risk introducer entity of that component, in accordance with some embodiments of the disclosed technology;
Reference is made to Fig. 4, which is a flowchart of a method uploading an artifact to the organizational platform and associating it with an application - based on client-side strategy, in accordance with some embodiments of the disclosed technology;
Reference is made to Fig. 5, which is a flowchart of a method of configuring the organizational platform for server-side application matching and then uploading an artifact to the organizational platform and associating it with an application - based on server-side strategy, in accordance with some embodiments of the disclosed technology; and
Reference is made to Fig. 6, which is a flowchart of a method for generation and enrichment of a software package, in accordance with some embodiments of the disclosed technology.

### DETAILED DESCRIPTION OF THE DISCLOSED TECHNOLOGY

Embodiments of the disclosed technology may include a device, system, method and non-transitory computer readable medium for identifying a risk introducer (e.g. an entity which introduces a risk) to a software component in a software package release that contains a risk. The risk may be a selected from a security risk, a legal/compliance risk, an operational risk and other risks. In one aspect, the disclosed technology includes a method comprising: generating a list of software components included in the software package; adding metadata to the software package with enrichment information identifying entities participating in development of the software components from resources external to the software package; identifying dependencies between one or more entities in each of the software components; and upon determining a risk in one or more of the software components, identifying a risk introducer entity from amongst the one or more entities.

The process of identifying the risk introducer entity may comprise generating metadata of a software package of a given package version/artifact; identifying risks in the software package - either introduced by the package version/artifact itself (i.e. 1st party) or by its dependencies (2nd or 3rd party); using a dependency projection on the generated software package to identify the paths from the package version of the component to its dependencies. The dependency projection may be, for example, a graph or mapping of the dependencies. In some embodiments, the graph includes direct and transitive dependencies, such that the graph may reveal paths (e.g. all paths) from a root software component to its nested dependencies. The graph may be utilized to identify a shortest effective dependency path between the root software component and the software component containing the risk. Shortest in this context may mean passing through the least number of points. When a software component is a dependency on another component and is reachable via several paths, the shortest path may be the effective path (i.e. the path that impacts the actual inclusion of that component originally in the list).

In some cases, traversing the graph may be performed in order to identify all paths from the root software component to each dependent software component included in the software package. In some cases, traversing the graph comprises determining, for each software component, whether its dependency relationship to the root software component is direct or transitive. In some cases, traversing the graph comprises, for each software component containing a risk, identifying a sequence of dependencies and corresponding owners leading from the root software component to the software component containing the risk.

Embodiments may include identifying an owner within the organization developing the software package ("the developer organization") to mitigate and handle risks among software package dependencies that assemble a software release. A binary artifact manager is a system that acts as a source of record for all binary artifacts (developed internally and onboarded externally) within the organization. Embodiments may include a mechanism to correlate between the artifacts to the organizational structure and personnel of the developer organization. Embodiments may include utilizing the correlation capabilities to identify a software package dependency tree and assigning each component dependency to a correct owner (e.g. person) within the organization.

An organizational platform such as Artifactory by JFrog Ltd. may in some embodiments provide the user with the ability to store all binary package artifacts (i.e. an artifact management system) within the same platform, whether the binary package artifacts are third party components and packages onboarded into the organization, or first party components and packages that have been developed internally. In other embodiments, it will be understood that other binary artifact managers or systems may be utilized as the organizational platform. Some embodiments may include enabling generation of Software Bill of Materials (SBOM) or a software package for each complex package (a complex software package is composed of other software packages) - leveraging the knowledge about stored packages from Artifactory or from the organizational platform. Some embodiments may include projecting the generated SBOM onto a dependency tree. The tree shows the relationships between components, and which component is required by which other components (thereby showing the reason behind the existence of said packages). Embodiments may include enabling users to determine or otherwise extrapolate the shortest effective dependency path. This includes the ability to perform the shortest effective dependency path on a deployed component (components deployed into the complex package) for first, second and third party components.

Embodiments may include associating each component artifact with the artifact's organizational owner. The association may be done automatically, based on predefined rules, when the component artifact is created in the organizational platform or another database accessible to developers of the organization. Embodiments may include merging a plurality of layers of information, and providing, for each component in the SBOM, the organizational owner which is in charge of maintaining it (within the developer organization), and its 3rd party dependencies. Embodiments may include allowing a user who develops a complex software package to associate the party responsible for each risk introduced by a 3rd party component.

FIG. 1 illustrates an example system for identifying a risk introducer entity for a software component in a software package that contains a risk.

System 100 may comprise a processor/processing unit 130 (which may comprise a central processing unit (CPU) (or multiple CPUs), and/or a graphics processing unit (GPU) (or multiple GPUs)), a memory 110, a mass storage device 115, and an I/O interface 145 connected to a bus 170. The I/O interface 145 may be connected to one or more input/output peripherals. The bus 170 may be one or more of any type of several bus architectures including a memory bus or memory controller, a peripheral bus, or the like. A network interface 135 enables the network processing device to communicate over a network 180 with other processing devices such as those described herein.

The mass storage device 115 may comprise any type of storage device configured to store data, programs, and other information and to make the data, programs, and other information accessible via the bus 170. The mass storage device 115 may comprise, for example, one or more of a solid-state drive, hard disk drive, a magnetic disk drive, an optical disk drive, or the like. The mass storage device 115 includes instructions 125 which when executed by the CPU (or processor) cause the processor 130 to perform the methods described herein.

In one embodiment, the mass storage 115 instructions 125 are configured to cause the processor 130 when executing the instructions, to perform the functions described for instances of components of the system 100. As such, in one embodiment, the memory 110 includes one or more instances of a dependency identifier 120, a communication gateway 140, and graph generator 150. One or more instances of software package metadata generator 160 may be resident in memory 110.

The mass storage 115 may thus include code in the form of instructions for executing the functions of a package components list (SBOM) generator 130, dependency identifier 120, communication gateway 140, and graph generator 150, and for creating and updating software package metadata generator 160, which may further be stored in mass storage 115.

The processor 130 may comprise any type of electronic data processor. Memory 110 may comprise any type of system memory such as static random-access memory (SRAM), dynamic random-access memory (DRAM), synchronous DRAM (SDRAM), read-only memory (ROM), a combination thereof, or the like. In an embodiment, memory 110 may include ROM for use at boot-up, and DRAM for program and data storage for use while executing programs. In embodiments, the memory 110 is non-transitory.

In some embodiments, system 100 comprises a network processing device which may be used to implement the disclosed embodiments. It should be understood that while components of system 100 are disclosed as incorporated into a processing device, the components of system 100 may be performed on different processing devices and, whether including all or part of system 100 on individual processing devices, multiples of system 100 may be operated sequentially or in parallel in accordance with the techniques discussed herein. In some embodiments, the network processing device may contain multiple instances of a component, such as multiple processing units, processors, memories, interfaces, etc.

The dependency identifier 120 is configured to identify dependencies between software components in a software package. The dependency identifier 120 may receive the software package, for example in a format of a SBOM. Dependency may include one software component that uses an output of another software component or a command or action performed by another software component.

The communication gateway 140 may be configured to request and/or access metadata about software components in the software package. The communication gateway 140 may be an internet gateway or a communication component configured to receive and send messages, signals and/or commands to other devices or virtual entities such as servers and web pages.

The graph generator 150 is configured to generate a graph of dependencies between the software components included in the software package. The metadata storage 165 stores metadata of the software packages which make up a software release. The metadata may include information such as the document's author, creation date, last modified date, version history, file size, document type, access permissions, and/or keywords that describe the content or purpose of the software components. In some embodiments the graph comprises software components in the software package represented as nodes and dependency relationships represented as edges connecting the nodes.

Package component list generator 155 may generate a list of software components included in the software package. The package component list generator 155 may receive the software package and identify the separate software components included therein. Identifying the separate software components may be performed based on metadata of the software components or based on text included in the software package.

Metadata storage 165 may store metadata of the software components and software package. The metadata may be updated when new components are added to the software package. The metadata may be created by the software package metadata generator 160, for example based on a set of rules or commands generated by a large language model or by accessing data in the organizational platform 195.

Client (e.g. developer client) 175 may be a user or an AI agent. The client 175 sends the application identifier as part of requests to upload a package artifact. The client 175 sends the application key as part of the request for uploading (creating) artifacts to the repository and use an access token when requesting the uploading process. Client 175 may contact the organizational platform 195, undergo authentication, and request to create an access token with sufficient authorization scope for uploading artifacts, and to include an application key {app} in the generated token. The organizational platform 195 may return a generated token with the requested authorization scope and the application key {app}. In some embodiments, the client 175 may comprise one or more processing devices having components similar to those in system 100 such as a processor, mass storage, memory, network interface and I/O interface.

Build tool (e.g. package build tool) 185 may be configured and/or executed by client 175 to use the access token. Build tool 185 may have the functionalities of tools such as Maven, Docker, cURL and the like. Build tool 185 may upload artifacts to the organizational platform 195 and authenticates using the access token.

External components 190 may be devices (e.g. such as those described for system 100) or virtual machines installed or operating outside the organizational platform 195, such as servers, applications, electronic devices and the like.

Organizational platform 195 may include servers (e.g. such as those described for system 100) and applications operating on devices and virtual machines owned by or operated by an organization, such as a company. Organizational platform 195 may include memory storage units for storing information such as Artifactory or other versions of software components or software packages.

Reference is made to Fig. 2, which is a flowchart of a method of identifying a software component in a software package that contains a risk, in accordance with some embodiments of the disclosed technology. Embodiments of the method may be performed as a set of executable instructions executed by one or more processors, e.g., the processor(s) 130.

In operation 210, a list of software components that may be included in the software package may be generated by the package component list generator 155. A SBOM is a list of multiple software components that comprise a specific software package release. Modern software development processes include integrating a variety of software component dependencies into a final product (e.g. final form factor), both from external, 3rd party sources, and internally developed libraries that have been developed inside the organizational entity. The SBOM generation process generates the list of software components for a specific software package. Though SBOM generation tools are already available to the public, some SBOM generation systems add value about internal packages and not just 3rd party dependencies. The "risk introducer" might be these internally developed packages and is used to understand the dependencies of 1st party packages as this information is not publicly available and also might not reside in the scanned artifact. The added value about internal components may include vulnerabilities within internal packages, not just of 3rd party components.

An organizational entity may have access to an organizational platform 195 that stores the software release and may scan them and stores the software components of the software package in a connected way. In some embodiments, the organizational platform includes a catalog and a universal binary repository which stores, manages, versions, and distributes build artifacts and software packages in a centralized, controlled environment. Generating the list of software components may require access to the binary artifacts that flow through the organization, both imported from external sources, and all the intermediate binary artifacts that are part of the software development and build process of the software package. These binary artifacts may include "2nd" party libraries, which are libraries that are being developed internally within the organization, but used between different organizational units or developers within the organization. The "2nd" party libraries may be used by a developer or development team within the organization that did not develop the software component, in similar fashion to how such a team will use an externally developed library. The availability of the information, metadata, and binary files of these libraries, that are not public property and thus are not available to other tools, allows a software package generation tool to query the organizational platform when the software package generation tool encounters the binaries of these artifacts when they are used by other teams and other organizational units. This provides a more complete list of the software components which are used in the organizational entity and associates the software components with the software package. When software packages are installed in the software package release bundle, docker, or any kind of final form of a software product release, many parts of the needed metadata cannot be found in the package. Integration of the software package generation with the organizational platform allows the software package generation tool to query the organizational platform to recover this information, such as dependency declaration, and component owner association of these packages.

In operation 220, metadata may be added to the software package with enrichment information that may identify entities participating in the development of the software components from resources external to the software package. The metadata may be added by processor 130 or by software package metadata generator 160, for example by accessing metadata storage 165. Metadata refers to information that describes other data, such as the author of a document, the date it was created, or the file size. For example, metadata in a software component may refer to descriptive information that provides context or details about the component itself. This can include data such as the component's author, creation date, version number, last modified date, dependencies, organizational owner, access permissions, and keywords describing its purpose or functionality. Metadata may also include information about the component's declared dependencies, package ownership, vulnerability data, and associations with other software packages or organizational entities. This metadata may be useful for managing, tracking, and analyzing software components within larger systems, especially for tasks like risk identification, compliance, and ownership assignment.

In operation 230, dependencies between one or more components in the software package may be identified by dependency identifier 120. In some cases, the version of the package dependency that is installed in the product release contains the relevant metadata that provides this information. In other cases, it does not, and the method disclosed herein may include leveraging the power of the organizational platform to query and enrich the software package with this information.

In operation 240, upon determining a risk in one or more of the software components, the method includes identifying a risk introducer entity from amongst the one or more entities. Identifying may use graph generator 150 to create a graph of the software components in the software package and the processor 130 for analyzing the graph. Risks may include the following examples: a publicly known security vulnerability - (e.g., identified by a CVE ID - identifier in a global database for publicly known vulnerabilities in publicly known software components). For instance, the library log4j (org.apache.logging.log4j:log4j-core) in versions between 2.0.0 and 2.15.0 was vulnerable to a security vulnerability, allowing remote code execution, identified by CVE-2021-44228 (Log4Shell). Another risk can relate to a software license, under which a specific software dependency is distributed. Some licenses are considered a legal risk by a vendor and as such, do not allow developers to use components distributed under such license. For instance, the python package igraph (https://pypi.org/project/igraph/ - a collection of network analysis tools) is distributed under GPL license. The GPL software license requires each user of the library to disclose the source code using this library.

By establishing a clear connection between a piece of software and its creator or owner (i.e. entity), organizational developers can gain immediate insights into the software's reliability, quality, and support. This association enables developers to reference the entity's reputation, past projects, and user feedback when deciding whether to adopt the software. Furthermore, it enhances accountability: if an issue arises, users may have a specific point of contact for support, updates, or improvements. Moreover, associating software with its owner aids to facilitate clear communication regarding maintenance, and future development.

Reference is made to Fig. 3, which is a flowchart of a method of identifying a software component in a software package that contains a risk using a dependency graph, and identifying a risk introducer entity of that component, in accordance with some embodiments of the disclosed technology. Embodiments of the method may be performed as a set of executable instructions executed by one or more processors, e.g., the processor(s) 130.

In operation 310, a software package that may include a list of software components such as an SBOM may be collected by the package component list generator 155. For example, a software package containing multiple open-source libraries may be collected from a repository in the organizational platform, such as Artifactory, or from resources external to the organizational platform. Additionally, packages from different development teams may be gathered to ensure all relevant components are included in the analysis.

In operation 320, a graph of dependencies among the software components included in the software package may be generated by graph generator 150. For example, a dependency graph may be generated to show how each component (library or module) relies on others within the software package. Visualization tools may be used to represent these relationships for easier analysis. In some embodiments, the graph may be a directional graph. Dependencies may be between versions of different packages. For example, a software package of type "Maven" may have multiple versions ("2.0.0", "2.1.0", etc.). When a user develops software, part of the development includes declaring dependencies on other package versions, for example on "log4j-core:2.14.0".

In operation 330, the dependencies of software components in the software package may be analyzed, for example by processor 130. For example, the dependencies may be analyzed to determine if any outdated or vulnerable libraries are present in the software package. Automated tools may be used to scan for known security issues within the dependencies.

In operation 340, connections between dependent and required software components may be established, for example according to information stored in metadata storage 165 and by processor 130 that analyzes the metadata. For example, connections may be established between a web application component and the database driver it requires. Similarly, links may be created between a logging module and the core application framework it depends on.

In operation 350, the graph may be traversed to identify the risk introducer entity of the risk identified in operation 240. The graph may be traversed by graph generator 150 or by processor 130 that may execute a set of rules or algorithms on the graph. The graph represents which package depends on which other package. The way this graph is built represents which package is a 1st part dependency, 2nd party dependency or a 3rd party dependency. The traverse order may be selected by a person skilled in the art, for example based on the Breadth First Search (BFS) techniques.

The risk introducer entity may be a user or person or a virtual machine such as an AI agent that generated or provided the software component that contains the risk. Identifying the risk introducer entity may include identifying whether dependencies are direct or transitive, and if a dependency is transitive - which other dependency requires the transitive dependency; and for package versions which include risks - identifying its direct owner (risk introducer entity) and the owners of package versions in the transitive dependencies path that leads to the software package that contains the risk. After identifying the path to the risk and the owner of 1st or 2nd party package version in the path, the owner which is closest to the software component that contains the risk may be identified as the "risk introducer entity". The closest owner may be determined according to a shortest path to the software component that contains the risk or based on other paths. Choosing the closest owner may be used for presentation/sort purposes.

The graph may be traversed using a traversing technique such as breadth-first search (BFS) or depth-first search (DFS) algorithm to systematically explore dependency paths. Automated tools may be used to perform this traversal and highlight the shortest or most critical paths leading to the risk introducer. The graph may be traversed by a graph generator configured to analyze dependency relationships and generate path information for risk assessment or reporting.

Reference is made to Fig. 4, which is a flowchart of a method uploading an artifact to the organizational platform and associating it with an application - based on a client controlled upload strategy (e.g. an upload controlled by developer client 175), in accordance with some embodiments of the disclosed technology. Embodiments of the method may be performed as a set of executable instructions executed by one or more processors, e.g., the processor(s) 130.

After associating the package artifacts (and thus also of the package version they represent), the association may be stored within the organizational platform, regardless of the internal location (repository) where the package artifacts are stored. This association of packages with an application may provide clear package ownership, based on the owners of the application. The client-side strategy may rely on the client sending the application key as part of the request for uploading (creating) artifacts to the repository. Upload may be done using HTTP requests

In operation 410, a client 175 calls (e.g. API call) the organizational platform 195, authenticates, requests to create an access token with sufficient authorization scope for uploading artifacts, and to include an application key {app} in the generated token. As noted above, the client may be a human user or an AI agent, operating on a network-enabled processing device.

In operation 420, the organizational platform 195 returns a generated token with the requested authorization scope and the application key {app}.

Sending the application key as part of the request may be performed in various ways, such as via a dedicated HTTP header or a query parameter with the application key and via a dedicated claim in a JSON Web Token (JWT) which is used for authentication and authorization of the request. The second approach (using a claim in the JSON Web Token) may utilize the fact that most requests need to be authenticated using some credentials in which their details are usually obfuscated from the client's perspective. The client usually needs to use an access token. Many build tools and package managers use such a mechanism. Having the application key as part of the token may be abstracted away from the tool, which can continue to operate as usual without any intervention (whereas using a custom header or query parameter would have required a change in the tool).

In operation 430, the client 175 configures the build tool (e.g. Maven, Docker, cURL, etc.) to use the access token. For example, the client may set an environment variable or update a configuration file to include the access token for Maven or Docker. The access token may also be provided as a command-line argument when running the build tool.

In operation 440, the client 175 executes the build tool. For example, the client may run a command in the package build tool to build a software package (such as a Maven build command such as 'mvn deploy' or execute a Docker push command). The build tool may then initiate the process of compiling code, packaging artifacts, and preparing them for upload.

In operation 450, the build tool 185 uploads artifacts to the organizational platform, authenticates using the access token. For example, the build tool may upload a JAR file, Docker image, or other artifact types to the organizational repository. During the upload, the access token may be used to verify the client's identity and permissions.

In operation 460, the organizational platform 195 stores the artifact in its designated location. For example, the organizational platform may store the uploaded artifact in a specific repository or storage bucket based on project or team. Metadata about the artifact, such as version and uploader may also be recorded in the platform's database.

In operation 470, the organizational platform 195 extracts the {app} from the authenticated principal in the request context and associates the artifact with the application

Reference is made to Fig. 5, which is a flowchart of a method of configuring the organizational platform 195 for server-side application matching and then uploading an artifact to the organizational platform 195 and associating it with an application performed by components of the system 100 - based on server-side strategy, in accordance with some embodiments of the disclosed technology.

The server-side strategy may rely on predefined rules in the server for matching artifacts to applications. Each application can have several defined rules. The rules may be based on the identifier of the uploaded artifact or the identifier of the package version it belongs to. The rules may also be based on the request context and the target repository the artifact was uploaded to. Such rules can include patterns to match the artifact path, key of the repository the artifact was uploaded to, the package type and name pattern the artifact is part of. When an artifact is uploaded, the server may apply the rules based on the request context, target repository, artifact path and package identifier. The first matching application is then associated with the artifact.

In operation 510, a client 175 with application owner privileges may configure the artifacts matching strategy for the application. As noted above, the client may be a user or an AI agent. The organizational platform 195 may receive the uploaded packages and apply rules to match the package artifact with the relevant application. The matching rules may be based on the package identification, the location it was uploaded to, and additional contextual information available to the process at the time of the upload.

In operation 520, the client 175 may execute the build tool. In this step, the client may initiate the process by running a build command or script, which compiles the source code and generates build artifacts. This operation may ensure that the latest version of the code is packaged and ready for further processing by the build tool.

In operation 530, the build tool 185 may upload artifacts to the organizational platform 195. During this operation, the build tool may securely transfer the generated artifacts to a centralized organizational platform. This step facilitates version control and enables further automated processing or deployment of the artifacts.

In operation 540, the organizational platform 195 may store the artifact in its designated location. The organizational platform may receive the uploaded artifact and save it in a predetermined repository or storage location. This may enable the artifact to be available for subsequent operations, such as analysis, deployment, or distribution.

In operation 550, the organizational platform 195 may apply matching rules on the artifact to identify the matching application {app}. At this stage, the platform evaluates the artifact using predefined matching criteria to determine its intended application context. This may be used to automate the classification and routing of artifacts within the organization's software ecosystem.

In operation 560, the organizational platform 195 may associate the artifact with the application. The organizational platform may create a formal link between the artifact and its corresponding application, updating internal records or metadata as needed. This association may be used for tracking, deployment, and lifecycle management of the application and its components.

Reference is made to Fig. 6, which is a flowchart of a method for generation and enrichment of a software package, in accordance with some embodiments of the disclosed technology.

In operation 610, resources may be input to the software package generation component (e.g. Xray). For example, source code repositories, binary files, or configuration scripts may be input as resources to the software package generation component. Additionally, third-party libraries or container images may be provided as input resources for analysis and inclusion in the software package generation process.

In operation 620, the resource may be extracted and analyzed by the package component list generator 155, and a list of all software packages inside the given resource may be created. The metadata found inside the resource may be analyzed, and for each package, the software dependencies it needs as declared in the metadata (Declared Dependencies) may be included.

In operation 630, the processor 130 may issue requests to different platform services like metadata storage 165, Artifactory and organizational platform 195, or external components 190 to enrich the software package with metadata existing in the organizational platform 195 or in external components 190. It will use previously analyzed metadata from resources loaded to Artifactory and enrich the Dependency Declarations in the software package - with more information that might not have existed in the analyzed resource itself.

In operation 640, the enriched software package may be sent to the dependency identifier 120. The enriched software package may be sent to the dependency identifier 120 by uploading it through an API endpoint used by the processor 130. Alternatively, the package may be transferred automatically by the software package generation component once enrichment is complete.

In operation 650, the software package may be projected on a dependency graph structure by the dependency identifier 120, with each dependency declaration being matched with the correct software component from the software package. Dependency projection on the generated SBOM may be used to identify the paths from the package version to its dependencies, identifying for each dependency whether its dependency relationship is direct or transitive, and if it is transitive - which dependency requires it. The software package may be projected onto a dependency graph structure by the dependency projection flow (e.g. dependencies may be mapped), allowing the relationships between components to be visually analyzed. Each dependency declaration may be matched with the appropriate software component from the package to facilitate risk identification and management.

Some embodiments of the invention may provide improved identification of the source of risks, such as errors, in software packages, thereby improving runtime security, stability, device lifetime, and/or interoperability. Embodiments of the invention may do so at scale, in shorter time frames than existing solutions, thereby reducing potential downtime. Identifying the source of risks (e.g. risk introducer) may allow for corrective or remedial action to reduce the impact of the risk introducer on the software package, thereby improving stability.

The descriptions of the exemplary embodiments have been presented for purposes of illustration but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

As used herein the term "about" and similar terms refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment may include a plurality of "optional" features unless such features conflict.

Throughout this application, various embodiments may be presented in a range format. It should be understood that the description in range format is merely for convenience and brevity and should not be construed as an inflexible limitation on the scope of the disclosed technology. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features, which are, for clarity, described in the context of separate embodiments, may also be provided in combination in a single embodiment. Conversely, various features, which are, for brevity, described in the context of a single embodiment, may also be provided separately or in any suitable subcombination or as suitable in any other described embodiment. Certain features described in the context of various embodiments are not to be considered essential features of those embodiments, unless the embodiment is inoperative without those elements.

Although the specific embodiments has been described, it is evident that many alternatives, modifications and variations will be apparent to those skilled in the art. Accordingly, it is intended to embrace all such alternatives, modifications and variations that fall within the spirit and broad scope.

It is the intent of the applicant(s) that all publications, patents and patent applications referred to in this specification are to be incorporated in their entirety by reference into the specification, as if each individual publication, patent or patent application was specifically and individually noted when referenced that it is to be incorporated herein by reference. In addition, citation or identification of any reference in this application shall not be construed as an admission that such reference is available as prior art to the disclosed technology. To the extent that section headings are used, they should not be construed as necessarily limiting. In addition, any priority document(s) of this application is/are hereby incorporated herein by reference in its/their entirety.

The description also includes the subject matter of the following clauses:
Clause 1: A method of identifying an owner of a software component that contains a risk in a software package, the method comprising:
   generating a list of software components included in the software package;
   adding metadata to the software package with enrichment information identifying entities participating in development of the software components from resources external to the software package;
   identifying dependencies between one or more software components of the software package; and
   upon determining a risk in one or more of the software components, identifying a risk introducer entity from amongst the entities.
Clause 2: The method of clause, 1 further comprising generating a graph of the dependencies among the software components included in the software package, and wherein identifying the risk introducer entity comprises traversing the graph to identify the risk introducer entity.
Clause 3: The method of clause 1, wherein adding metadata to the software package comprises issuing requests to one or more organizational platforms services to obtain additional metadata for the software components included in the software package.
Clause 4: The method of clause 3, wherein the additional metadata comprises information regarding declared dependencies, package ownership, license, operational information and vulnerability data.
Clause 5: The method of clause 3, wherein adding metadata to the software package utilizes previously analyzed metadata from resources stored in an artifact management system to supplement the software package.
Clause 6: The method of clause 3, wherein adding metadata to the software package includes associating software components in the software package with an organizational owner based on information retrieved from the one or more organizational platforms.
Clause 7: The method of clause 3, wherein adding metadata to the software package comprises querying the organizational platform to recover missing metadata for packages installed in at least one of the following: a release bundle, docker image, or other final form factor of a software product release.
Clause 8: The method of clause 3, wherein adding metadata to the software package comprises querying the organizational platform specifically to obtain dependency declarations and software component owner associations when metadata is absent from the package itself.
Clause 9: The method of clause 2, wherein generating the graph comprises integrating the software package with software component dependencies.
Clause 10: The method of clause 2, wherein the graph comprises software components in the software package represented as nodes and dependency relationships represented as edges connecting the nodes.
Clause 11: The method of clause 2, wherein generating the graph comprises analyzing the dependencies of software components in the software package and establishing connections between dependent and required software components.
Clause 12: The method of clause 11, wherein the graph is created by matching each dependency declaration in the software package with a corresponding package, thereby modeling relationships between software components in the software package.
Clause 13: The method of clause 12, wherein the graph includes direct and transitive dependencies, such that the graph reveals all paths from a root software component to its nested dependencies.
Clause 14: The method of clause 13, wherein the graph is utilized to identify a shortest effective dependency path between the root software component and the software component containing the risk.
Clause 15: The method of clause 13, comprising traversing the graph to identify all paths from the root software component to each dependent software component included in the software package.
Clause 16: The method of clause 13, wherein traversing the graph comprises determining, for each software component, whether its dependency relationship to the root software component is direct or transitive.
Clause 17: The method of clause 13, wherein traversing the graph comprises, for each software component containing a risk, identifying a sequence of dependencies and corresponding owners leading from the root software component to the software component containing the risk.
Clause 18: The method of clause 12, wherein traversing the graph is performed automatically by a graph generator configured to analyze dependency relationships and generate path information for risk assessment or reporting.
Clause 19: A system for identifying an owner of a software component that contains a risk in a software package, the system comprising a processor configured to execute a set of instructions, the instructions comprising:
   generating a list of software components included in the software package;
   adding metadata to the software package with enrichment information identifying entities participating in development of the software components from resources external to the software package;
   identifying dependencies between one or more software components of the software package; and
   upon determining a risk in one or more of the software components, identifying a risk introducer entity from amongst the entities.
Clause 20: The system of clause, 19 wherein the instructions comprise generating a graph of the dependencies among the software components included in the software package, and wherein identifying the risk introducer entity comprises traverse the graph to identify the risk introducer entity.

## Claims

1. A method of identifying an owner of a software component that contains a risk in a software package, the method comprising:
generating a list of software components included in the software package;
adding metadata to the software package with enrichment information identifying entities participating in development of the software components from resources external to the software package;
identifying dependencies between one or more software components of the software package; and
upon determining a risk in one or more of the software components, identifying a risk introducer entity from amongst the entities.

2. The method of claim 1, further comprising generating a graph of the dependencies among the software components included in the software package, and wherein identifying the risk introducer entity comprises traversing the graph to identify the risk introducer entity.

3. The method of any of claims 1-2, wherein adding metadata to the software package comprises issuing requests to one or more organizational platforms services to obtain additional metadata for the software components included in the software package, wherein optionally
the additional metadata comprises information regarding declared dependencies, package ownership, license, operational information and vulnerability data.

4. The method of claim 3, wherein adding metadata to the software package includes one or more of:
(a) utilizing previously analyzed metadata from resources stored in an artifact management system to supplement the software package;
(b) associating software components in the software package with an organizational owner based on information retrieved from the one or more organizational platforms;
(c) querying the organizational platform to recover missing metadata for packages installed in at least one of the following: a release bundle, docker image, or other final form factor of a software product release; or
(d) querying the organizational platform specifically to obtain dependency declarations and software component owner associations when metadata is absent from the package itself.

5. The method of claim 2, wherein generating the graph comprises integrating the software package with software component dependencies.

6. The method of claim 2, wherein the graph comprises software components in the software package represented as nodes and dependency relationships represented as edges connecting the nodes.

7. The method of claim 2, wherein generating the graph comprises analyzing the dependencies of software components in the software package and establishing connections between dependent and required software components,
wherein the graph is generated by matching each dependency declaration in the software package with a corresponding package, thereby modeling relationships between software components in the software package.

8. The method of claim 7, wherein the graph includes direct and transitive dependencies, such that the graph reveals all paths from a root software component to its nested dependencies.

9. The method of claim 8, wherein the graph is utilized to identify a shortest effective dependency path between the root software component and the software component containing the risk.

10. The method of claim 8, comprising traversing the graph to identify all paths from the root software component to each dependent software component included in the software package.

11. The method of claim 8, wherein traversing the graph comprises determining, for each software component, whether its dependency relationship to the root software component is direct or transitive.

12. The method of claim 8, wherein traversing the graph comprises, for each software component containing a risk, identifying a sequence of dependencies and corresponding owners leading from the root software component to the software component containing the risk.

13. The method of claim 7, wherein traversing the graph is performed automatically by a graph generator configured to analyze dependency relationships and generate path information for risk assessment or reporting.

14. A system for identifying an owner of a software component that contains a risk in a software package, the system comprising a processor configured to execute a set of instructions, the instructions comprising:
generating a list of software components included in the software package;
adding metadata to the software package with enrichment information identifying entities participating in development of the software components from resources external to the software package;
identifying dependencies between one or more software components of the software package; and
upon determining a risk in one or more of the software components, identifying a risk introducer entity from amongst the entities.

15. The system of claim 14, wherein the instructions comprise generating a graph of the dependencies among the software components included in the software package, and wherein identifying the risk introducer entity comprises traversing the graph to identify the risk introducer entity.
